# EUROPÄISCHE PATENTANMELDUNG

(11) **EP 3 496 009 A1**
(43) Veröffentlichungstag der Anmeldung: **12.06.2019**
(21) Anmeldenummer: 17205828.1
(22) Anmeldetag: 07.12.2017
(51) Int. Cl.: G06Q 10/00

(54) **COMPUTERSYSTEM ZUR EFFIZIENTEN ERZEUGUNG EINER ENTSCHEIDUNG**

(71) Anmelder: Graf, Richard, 61642 Königstein im Taunus (DE)
(72) Erfinder: Graf, Richard, 61642 Königstein im Taunus (DE)
(74) Vertreter: Ter Meer Steinmeister & Partner

(57) **Zusammenfassung**

Die Erfindung betrifft ein Computersystem zur effizienten Erzeugung einer gemeinsam getragenen Entscheidung mittels Motiven mit einer Schnittstelle zum Empfangen externer Eingangsparameter, die für die zu erzeugende Entscheidung relevant sind, wobei diese externen Eingangsparameter jedem Systemteilnehmer bereitgestellt werden; einem ersten Systemteilnehmer aufweisend zumindest ein erstes Motivprofil zum Bereit-steilen einer ersten teilnehmerabhängigen Zwischenentscheidung unter motivprofilabhängiger Bewertung der Eingangsparameter; zumindest einem zweiten Systemteilnehmer aufweisend zumindest ein zweites Motivprofil zum Bereitstellen einer zweiten teilnehmerabhängigen Zwischenentscheidung unter motivprofilabhängiger Bewertung der Eingangsparameter; einer Bewertungslogik zum Erkennen eines Grads an Übereinstimmung der ersten teil-nehmerabhängigen Zwischenentscheidung und der zweiten teilnehmerabhängigen Zwischenentscheidung anhand einer Übereinstimmungsskala, wobei beim Erkennen eines Übereinstimmungsgrads oberhalb eines definierten Wertes eine von dem ersten Systemteilnehmer und dem zumindest zweiten Systemteilnehmer gemeinsam getragene Entscheidung als erzeugt gilt und eine der teilnehmerabhängigen Zwischenentscheidungen als gemeinsam getragene Entscheidung ausgegeben wird, wobei beim Erkennen eines Übereinstimmungsgrads unterhalb eines definierten Wertes ein interner Systemzyklus zum Bereitstellen zusätzlicher Informationen aktiviert wird, welche allen Systemteilnehmern bereitgestellt werden, um die teilnehmerabhängigen Zwischenentscheidungen jedes Systemteilnehmers zu verändern.

## Beschreibung

### TECHNISCHES GEBIET DER ERFINDUNG

Die Erfindung betrifft ein Computersystem bestehend aus mindestens zwei Systemkomponenten, wobei das Computersystem eine gemeinsam getragene Entscheidung mittels Motiven effizient erzeugt.

### HINTERGRUND DER ERFINDUNG

Gute Entscheidungen sind die Voraussetzung für Erfolg und dienen dazu, externe und interne Herausforderungen zu bewältigen. Insbesondere die Herausforderungen der Digitalisierung mit agilen Methoden erfordern gute Entscheidungen. Gute Entscheidungen werden von allen mitgetragen, sowohl bei der Entscheidung als auch in der späteren Umsetzung. Gute Entscheidungen werden in einem Entscheidungsprozess hergestellt, der eine Verpflichtungserklärung, englisch "Commitment", von allen Beteiligten herstellt. Eine gute Entscheidung zeichnet sich dadurch aus, dass sie zu einem späteren Zeitpunkt eine gute Wirkung erzielt und damit ein gemeinsames Ziel erreicht wird. Eine Entscheidung ist dabei zumeist nur eine von mehreren Schritten in einer Sequenz von Veränderungsprozessen, an dessen Ende ein zu erreichendes Ziel steht.

Eine gute Entscheidung kann bereits zum Entscheidungszeitpunkt mit der Anzahl der Beteiligten, die sie gemeinsam tragen, gemessen werden und wird in einer angemessenen Zeit hergestellt. Dabei ist sie mehr auf das Commitment der Beteiligten zur Erreichung der Wirkung als auf eine rationale Begründung ausgerichtet. Bei allen Systemteilnehmern (auch als Systemkomponente oder Beteiligte bezeichnet) herrscht ein gemeinsames Verständnis für den Bedarf einer Entscheidung mit einer gemeinsamen Akzeptanz der Prämissen und Vorgaben. Ggf. sind die Prämissen und Vorgaben mit einer gemeinsam getragenen Entscheidung herzustellen. Eine gute Entscheidung und die dazu gewählten Maßnahmen werden gemeinsam getragen. Dabei fließt ein Expertenwissen ein, indem die Experten in ihrem Kompetenzbereich durch den Entscheidungsprozess in die Verantwortung genommen werden.

Zum Herstellen einer guten Entscheidung bedarf es eines geeigneten Entscheidungsprozesses, der flexibel für unterschiedliche und zugleich robust für spezifische Herausforderungen ist. Dieser Entscheidungsprozess soll sich immer am zu erreichenden Ziel orientieren und ist nachvollziehbar zu gestalten. Es ist eine unveränderte Prozess-Dokumentation zu erstellen, die ein beliebiges Wiederaufsetzen des Entscheidungsprozesses erlaubt und so ausweichende Rückzugsmöglichkeiten stark einschränkt.

Eine gute Entscheidung ist insbesondere eine gemeinsam getragene Entscheidung. Ein natürlicher Zielkonflikt zwischen Sicherheit und Chance sowie zwischen individuellen und übergeordneten Konsequenzen für einen an dem Entscheidungsprozess beteiligten Systemteilnehmer setzt eine Dynamik in Gang, die in einem Entscheidungsprozess für eine gute Entscheidung berücksichtigt und gelöst werden muss.

Diese Gruppendynamik bei den unterschiedlichen Zielkonflikten ist hinderlich für einen soliden und robusten Entscheidungsprozess oder blockiert gegebenenfalls Motive einzelner Systemteilnehmer im Entscheidungsprozess in der Weise, dass nachteilige - schlechtere - Entscheidungen getroffen werden. Daher wird ein Entscheidungsprozess benötigt, der eine neue zukunftsfähige Entscheidungskultur herstellt. Dabei sollte ein Entscheidungssystem, das die Entscheidungsprozesse steuert, die Gruppendynamik anhand von Motiven funktional ausrichten, so dass jeder Systemteilnehmer im Entscheidungsprozess gleichermaßen in die Lage versetzt wird, gewollte Veränderungen verantwortungsvoll zu gestalten.

Gute Entscheidungen können mit Hilfe von Computersystemen getroffen werden, wobei die bislang bekannten Computersysteme bislang lediglich Entscheidungshilfen anbieten, die nach dem klassischen Konzept aus Führung, Psychologie und Pädagogik funktionieren. Sie berücksichtigen bisher rationale Entscheidungen und die rationale Logik, statistische Prognosen und kognitive Algorithmen. Bisher werden emotionalen Motive (im Weiteren als Motiv bezeichnet) und die zugehörige Emotionslogik nicht berücksichtigt.

Dabei werden auch falsche Entscheidungen getroffen oder eine getroffene Entscheidung mit einer falschen Begründung versehen. Dies kann durch folgende zum Teil dysfunktionalen Entscheidungsphänomene beobachtet werden: Bestätigungsfehler (Informationen werden gesucht, um vorhandene/etablierte Einstellungen zu bestätigen und widersprechende Belege zu vernachlässigen); Rückschaufehler (Verzerrung einer Systemteilnehmerprognose); Kontrollillusion (Annahme, dass ein zufälliges Ereignis durch bewusste Steuerung beeinflusst wurde); Halo-Effekt (von bekannten Merkmalen wird auf weitere Eigenschaften geschlossen); Vermessenheitsverzerrung (Überschätzung der Leistung eines Systemteilnehmers) und viele mehr. Die dysfunktionalen Entscheidungsphänomene sind unter kognitiven Entscheidungen bzw. kognitive Dissonanz zusammengefasst. Die Erfindung konzentriert sich darauf, die dysfunktionalen Entscheidungsphänomene erst gar nicht aufkommen zu lassen oder im Entscheidungsprozess zu korrigieren.

Bislang wird in Unternehmen überwiegend konservativ entschieden, wobei mehr zweitbeste und weniger gute Entscheidungen getroffen werden. Die Entscheidungsprozesse dauern zu lange, und sie werden nicht gemeinsam getragen. Die gewünschte Wirkung wird verfehlt. Dazu kommt, dass die unternehmerische Welt komplexer wird, sie verändert sich zunehmend schneller, sie wird mehrdeutiger und weniger vorhersagbar, und es werden immer mehr Personen an den Entscheidungsprozessen beteiligt, beispielsweise aufgrund der zunehmenden Digitalisierung.

Die Digitalisierung forciert zum einen die disruptiven Veränderungen durch die Maschine-Mensch- und vor allem die Maschinen-Maschinen-Kommunikation. Künstliche Intelligenz (KI), die jetzt eine ernstzunehmende Bedeutung bekommt, erfordert daher automatisierte Entscheidungsalgorithmen. Bereits bekannte agile Arbeitsmethoden, wie beispielsweise SCRUM oder KANBAN, führen zu einem grundlegenden Paradigmenwechsel im Projektvorgehen und erzwingen gleichzeitig ein agiles Führungsverhalten auf Augenhöhe in flachen Hierarchien. Sich widersprechende Führungsparadigmen aus tradiertem autoritärem Führen und agilem Führen erfordern nunmehr ein völlig neues automatisiertes Entscheidungsmanagement.

Zudem sind Teams gefordert, ihre komplette Gruppenkompetenz, auch Schwarmintelligenz genannt, zu integrieren. Die Gruppenkompetenz entsteht durch die Befähigung der einzelnen Systemteilnehmer, ihre Kompetenzen in eine gemeinsam getragene Entscheidung einzubringen und so, eine Gruppenvielfalt wertzuschätzend unterstützt. Die Erfindung regelt, dass die Kompetenzen in einem geordneten Entscheidungsprozess eingebracht werden oder eingebracht werden müssen.

Die Aufgabe der hier vorliegenden Erfindung ist es, ein Computersystem zu entwerfen, welches eine von einer unterschiedlichen Anzahl von Systemkomponenten gemeinsam getragene Entscheidung möglichst effizient und erzeugt. Dabei soll das Computersystem den Entscheidungsprozess zwischen einzelnen Systemteilnehmern derart steuern, dass keine Entscheidungsphänomene auftreten ggf. korrigieren, die die Entscheidung negativ beeinflussen. Der automatisierte Entscheidungsprozess und deren gute Entscheidungsalgorithmen für eine Maschine-Mensch-, Mensch-Maschinen- und vor allem Maschinen-Maschinen-Kommunikation sollen in Automaten implementierbar sein. Das Computersystem soll die zukünftige Entscheidungskultur fördern, traditionelle und agile Methoden zusammenführen, Gruppenintelligenz fördern und kognitive Services für Fakten zur Entscheidungsunterstützung wie Prognosemodelle und Algorithmen als Bewertungsmodelle in die Entscheidungsprozesse angemessen integrieren.

Dabei sollten auch verschiedene Entscheidungssysteme eines Systemteilnehmers entsprechend berücksichtigt werden. Diese können weitgehend parallel und autonom arbeiten und kommen zu unterschiedlichen Zeitpunkten, auf Basis unterschiedlicher Speichersysteme und verschiedener Computerlogiken, zu unterschiedlichen Entscheidungen. Die verschiedenen Entscheidungssysteme verarbeiten ein und denselben Input, Entscheidungsbedarf, Aussagen, Behauptungen, usw. (im Weiteren als Stimulus bezeichnet) auf unterschiedliche Art und Weise und kommen zu einer eigenen Bewertung und spezifischen Bedeutung. Obwohl beide Systeme weitgehend autonom arbeiten können, interagieren sie gleichzeitig sehr hoch und erscheinen daher wie ein monolithisches System. Maßgeblich für das Design von Entscheidungsprozessen ist die unterschiedliche Geschwindigkeit beider Entscheidungssysteme eines mit gleichzeitig einhergehender Parallelität, die eine Reihenfolge von Prozessschritten vorgeben.

### ZUSAMMENFASSUNG DER ERFINDUNG

Die Aufgabe wird mit den in dem unabhängigen Patentanspruch 1 beschriebenen technischen Maßnahmen gelöst. Vorteilhafte Ausgestaltungen sind in den jeweils abhängigen Patentansprüchen beschrieben.

Insbesondere wird die Aufgabe durch das Computersystem gemäß Patentanspruch 1 gelöst, welches zur effizienten Erzeugung einer gemeinsam getragenen Entscheidung mittels Motiven verhilft. Das Computersystem umfasst eine Schnittstelle zum Empfangen externer Eingangsparameter (Stimuli), die für die zu erzeugende Entscheidung relevant sind, wobei diese externen Eingangsparameter jedem Systemteilnehmer bereitgestellt werden.

Dieser externe Eingangsparameter ist beispielsweise ein externer Stimulus oder ein externer Auslöser. Dieser Parameter wird jedem Systemteilnehmer bereitgestellt und kann ein Motivprofil am jeweiligen Systemteilnehmer voreinstellen, auswählen oder gewichten. Der externe Eingangsparameter kann auch eine in Computerlogik umgesetzte Fragestellung zu einem zu entscheidenden Thema sein.

Das Computersystem umfasst zudem einen ersten Systemteilnehmer aufweisend zumindest ein erstes Motivprofil zum Bereitstellen einer ersten teilnehmerabhängigen Zwischenentscheidung unter motivprofilabhängiger Bewertung der Eingangsparameter und zumindest einen zweiten Systemteilnehmer aufweisend zumindest ein zweites Motivprofil zum Bereitstellen einer zweiten teilnehmerabhängigen Zwischenentscheidung unter motivprofilabhängiger Bewertung der Eingangsparameter. Dabei kann jeder Systemteilnehmer mehrere unterschiedliche Motivprofile aufweisen. Die Auswahl des Motivprofils erfolgt beispielsweise auf Basis der Eingangsparameter.

Ein Systemteilnehmer ist bevorzugt ein untergeordnetes Computersysteme oder eine sonstige intelligente Systemkomponente oder eine Computerlogik, die ein menschliches Entscheidungsverhalten abbildet. Die Anzahl der am Computersystem teilnehmenden Systemteilnehmer ist nicht beschränkt, es sollten aber lediglich alle diejenigen für das Erzeugen der gemeinsamen Entscheidung benötigte Systemteilnehmer im Computersystem aktiviert sein.

Das Computersystem umfasst zudem eine Bewertungslogik zum Erkennen eines Grads an Übereinstimmung der ersten teilnehmerabhängigen Zwischenentscheidung und der zweiten teilnehmerabhängigen Zwischenentscheidung anhand einer Übereinstimmungsskala. Diese Bewertungsinstanz legt somit fest, wieweit eine Übereinstimmung bei den teilnehmerabhängigen Zwischenentscheidungen erreicht ist. Eine dafür zu verwendende Bewertungslogik für den Grad der Übereinstimmung kann initial in einer Konfigurationsinformation festgelegt sein und kann durch gelerntes Wissen während des aktuellen Entscheidungsprozesses oder vorhergehender Entscheidungsprozesse wahlweise dynamisch festgelegt werden.

Beim Erkennen eines Übereinstimmungsgrads oberhalb eines definierten Wertes in der Übereinstimmungsskala gilt eine von dem ersten Systemteilnehmer und dem zumindest zweiten Systemteilnehmer gemeinsam getragene Entscheidung als erzeugt. Eine der teilnehmerabhängigen Zwischenentscheidungen wird sodann als gemeinsam getragene Entscheidung vom Computersystem ausgegeben.

Beim Erkennen eines Übereinstimmungsgrads unterhalb eines definierten Wertes in der Übereinstimmungsskala wird ein interner Systemzyklus zum Bereitstellen zusätzlicher Informationen aktiviert, welche allen Systemteilnehmern bereitgestellt werden, um die teilnehmerabhängigen Zwischenentscheidungen jedes Systemteilnehmers zu verändern.

Beim Erkennen eines Übereinstimmungsgrades der signifikant unterhalb des Wertes in der Übereinstimmungsskala liegt, wird in eine Verarbeitung des Entscheidungssystems verzweigt, die eine Annahme trifft, dass keine gemeinsame Entscheidung hergestellt werden kann. Diese Überprüfung wird nach jeder Interaktion wiederholt. Grundsätzlich gibt es drei Bedeutungsbereiche für eine gemeinsam getragene Entscheidung in der Übereinstimmungsskala. Ein erster Bedeutungsbereich "erreicht" erkennt, dass eine gemeinsam getragene Entscheidung bereits erzeugt ist. Ein zweiter Bedeutungsbereich "mit einem Entscheidungsprozess zu erreichen" erkennt, dass eine gemeinsam getragene Entscheidung unmittelbar bevorsteht und mit großer Wahrscheinlichkeit erreicht wird. Ein dritter Bedeutungsbereich "schwierig oder nicht zu erreichen" erkennt, dass mit den jetzigen Zwischenentscheidungen der einzelnen Systemteilnehmer keine gemeinsam getragene Entscheidung möglich ist oder zumindest äußerst unwahrscheinlich ist und nur durch Interaktionen einer oder mehrerer Systemteilnehmer, beispielsweise durch bewusste Beeinflussung der Motivprofile mittels der internen oder externen Computersystem-Services, überhaupt eine gemeinsam getragene Entscheidung hergestellt werden kann.

Gemeinsam getragene Entscheidungen lassen sich insbesondere dann effizient herstellen, wenn alle Systemkomponenten auf übereinstimmenden Fakten, also gleichen Informationen, aufsetzen und diese von den Motiven beziehungsweise von dem zusammenfassenden Motivprofil gleich oder ähnlich eingeschätzt, also bewertet, wird. Diese Annahme trifft immer dann zu, wenn alle Systemteilnehmer kooperieren und mindestens ein Systemteilnehmer die ausreichenden Fakten im Zugriff hat. Nur durch die Diversität und den Zugriff auf Fakten ist dies in hohem Maße gewährleistet.

Eine gemeinsam getragene Entscheidung ist immer dann erreicht, wenn die Entscheidung zu einer Übereinstimmung der Motive im Motivprofil führt. Der Grad, wann eine Übereinstimmung für eine gemeinsam getragene Entscheidung erreicht ist, wird auf der Übereinstimmungsskala abgebildet. In einer Konfigurationsinformation sind Standardkonfigurationen abgelegt, die für bestimmte Szenarien im Entscheidungsprozess selbst oder für verschiedene Entscheidungsprozesse angepasst sind oder sich auch im aktuellen Entscheidungsprozess des Computersystems dynamisch nachjustierbar sind.

Bevorzugt ist die Übereinstimmungsskala zehnstufig und bei einem vordefinierten Wert kleiner gleich dem Wert "5" wird "keine Übereinstimmung" festgestellt. Bei einem vordefinierten Wert größer gleich dem Wert "8" gilt eine gemeinsam getragene Entscheidung als erzeugt, der Bereich wird daher als "Übereinstimmung" bezeichnet. Die Werte zwischen den Bereichen "keine Übereinstimmung" und "Übereinstimmung" ist der Bereich, der mit Fakten und Interaktionen der Systemteilnehmer, deren Motive oder Motivprofile beeinflusst und daher als besonders gestaltbar gilt.

In einer Ausgestaltung des Computersystems verfügt ein Systemteilnehmer, beispielsweise wenn ein menschliches Entscheidungsverhalten als Computerlogik abgebildet wird, über zwei Entscheidungssysteme, das Emotions- und das Kognitionssystem. Diese Entscheidungssysteme in einem Systemteilnehmer arbeiten parallel, weitgehend autonom und kommen zu unterschiedlichen Zeitpunkten, auf Basis unterschiedlicher Informations- und Gedächtnissysteme, zu unterschiedlichen Entscheidungen. Beide Entscheidungssysteme verarbeiten ein und denselben Eingangsparameter, beispielsweise einen Stimulus, auf unterschiedliche Art und Weise und kommen zu einer eigenen Bewertung und spezifischen Bedeutung. Ein erstes Entscheidungssystem eines Systemteilnehmers verarbeitet den Stimulus nach einer ersten Logik, beispielsweise nach einer statistischen Voraussage oder einem heuristischen Vorgehen. Die erste Logik wird dabei als Kognitionslogik oder auch rationale Logik bezeichnet. Ein zweites Entscheidungssystem des gleichen Systemteilnehmers verarbeitet den gleichen Stimulus nach einer zweiten Logik, beispielsweise einer Emotionslogik oder weniger rationalen Logik, beispielsweise auf Basis von Motiven. Die Verarbeitung des Stimulus in der zweiten Logik, als im Emotionssystem, ist schnell, mühelos, unaufgefordert und/oder dem Bewussten nicht zugänglich. Die erste Logik, also das Kognitionssystem, verarbeitet den gleichen Stimulus bewusst und langsam. Das Kognitionssystem könnte als komplexer und vielverzweigter Wissensspeicher unter Anwendung von heuristischer, analytischer und statistischer Prozesse im Systemteilnehmer angesehen sein, das zusätzlich aktiviert werden muss. Dementgegen ist die zweite Logik beispielsweise eine Spontanbewertung auf Basis des Motives des Systemteilnehmers. Beide Logiken verarbeiten den Stimulus parallel und beeinflussen sich.

Ein zukunftsfähiges normierendes Entscheidungsmanagement erfordert ein klares Konzept, das die unterschiedlichen Entscheidungssysteme eines Systemteilnehmers und deren Interaktionen berücksichtigt. Obwohl beide Systeme weitgehend autonom arbeiten, interagieren sie gleichzeitig sehr hoch und erscheinen daher wie ein monolithisches Entscheidungssystem des Systemteilnehmers. Maßgeblich für den Entwurf von Entscheidungsprozessen ist die unterschiedliche Geschwindigkeit beider Systeme mit gleichzeitig einhergehender Parallelität, die eine Reihenfolge von Prozessschritten vorgeben. Die eingebetteten Motive im Motivprofil geben dabei die Reihenfolge im Entscheidungsprozess (Motivsequenz) vor.

Der erfindungsgemäße Entscheidungsprozess bindet vor allem Motive für einzelne am Entscheidungsprozess teilnehmende Systemkomponenten ein und berücksichtigt diese Motive. Insbesondere grenzt der erfindungsgemäße Entscheidungsprozess diese Motive nicht aus. Dabei ist eine hohe Anzahl von am System notwendigerweise beteiligter Teilnehmer nicht nachteilig für einen guten Entscheidungsprozess. Jeder Teilnehmer bringt potenziell Faktenwissen, analytische und heuristische Herangehensweise und auch Erfahrungswissen mit in das Computersystem ein.

In einer bevorzugten Ausgestaltung verfügt jeder Systemteilnehmer über zumindest ein weiteres Motivprofil. Das Motivprofil wird anhand der externen Eingangsparameter und/oder einer abgespeicherten Entscheidungshistorie von jedem Systemteilnehmer selbst ausgewählt. Eine Anzahl von Motivprofilen pro Systemteilnehmer kann dabei verschieden sein.

In einer bevorzugten Ausgestaltung ist jedes Motivprofil vorkonfiguriert und besteht aus einer vorkonfigurierten Motivsequenz. Eine Motivsequenz umfasst dabei zumindest ein erstes Motivprofil. Zusätzlich kann eine Motivsequenz weitere Motive, bevorzugt bis zu sieben verschiedene Motive, umfassen. Diese Motivsequenz wird im Computersystem gemäß der Konfiguration berücksichtigt. Dadurch wird den Motiven im Motivprofil bereits eine Wertigkeit gegeben, denn ein Computersystem kann dazu veranlasst sein, nur eine gewisse Anzahl von Motiven, beispielsweise nur das erste Motiv eines jeden Systemteilnehmers, zu berücksichtigen.

Jedes im Motivprofil enthaltene Motiv ist dabei mit einem Initialwert parametrisiert. Die von jedem Systemteilnehmer vorgenommene Bewertung zum Erhalten der Zwischenentscheidung wird mit individuellen und sozialen Motiven zu vorkonfigurierten Motivprofilen gebildet, die als potenzielle Lösungsbausteine den Systemteilnehmern zur Verfügung stehen. Jedes Motivprofil hat alle Motive in einer festen Sequenz mit einer entsprechenden Stärke vorgegeben. Die Präferenz für die Wahl eines Motivprofiles ändert sich mit der Anzahl der gelungenen und misslungenen Entscheidungen, also der Entscheidungshistorie des Systemteilnehmers und aber auch mit dem Verlauf des aktuellen Entscheidungsprozesses.

Ein Systemteilnehmer verfügt über eine unterschiedliche Anzahl von Motivprofilen. Über Stabilisierungs- und Destabilisierungsvorgänge gelungener und misslungener Entscheidungen können Motivprofile verändert werden. Bestehende Motivprofile sind nicht entfernbar von einer Systemkomponente. Ein spezielles Motivprofil hat vordefinierte Stärken und Schwächen in den einzelnen Motiven. Damit werden Regeln, die das Bereitstellen der Zwischenentscheidung beeinflussen, vordefiniert.

Bevorzugt weist das Computersystem eine Systemkonfigurator-Instanz, auch als Verwaltungsinstanz bezeichnet, auf. Diese Systemkonfigurator-Instanz kann einzelne Systemteilnehmer deaktivieren und aktivieren. Damit können beispielsweise unkooperative Systemteilnehmer vom Entscheidungsprozess ausgeschlossen werden oder Systemteilnehmer deren vollumfängliches Faktenwissen und individuelle Entscheidungshistorie bereits im Entscheidungsprozess berücksichtigt ist oder deren Faktenwissen für den Entscheidungsprozess irrelevant sind, werden so, aus dem Entscheidungsprozess genommen, wodurch das Computersystem schneller eine gemeinsam getragene Entscheidung erzeugt. Zudem kann die Systemkonfigurator-Instanz zusätzliche Systemteilnehmer aktivieren. Die Auswahl der nötigen (Governance) oder benötigten Teilnehmer wird durch die Systemkonfigurator-Instanz des Computersystems getroffen.

Bevorzugt weist jeder Systemteilnehmer einen eigenen Speicherbereich mit darin abgelegten Informationen als Faktenwissen und einer Entscheidungshistorie auf, auf deren Basis das Bereitstellen der teilnehmerabhängigen Zwischenentscheidung unter motivprofilabhängiger Bewertung der Eingangsparameter erfolgt. Zudem enthält das Computersystem beispielsweise eine Systemkomponente "Fertigung", welche aktuelle und detaillierte Fertigungsdaten aufweist und verwaltet. Zudem enthält das Computersystem beispielsweise eine Systemkomponente "Steuerung", welche umfassende aber historische Daten aufweist. Diese beiden Bereiche "Fertigung" und "Steuerung" können in einem für alle Systemteilnehmer zugänglichen Bereich des Computersystems untergebracht werden und teilen so ihr Faktenwissen und ihre statistischen und analytischen Prozessfähigkeiten mit den anderen Systemteilnehmern.

Bevorzugt wird bei Erreichen einer konfigurierten Anzahl von internen Systemzyklen ein Systemteilnehmer von der Bewertungsinstanz ausgewählt, dessen geänderte teilnehmerabhängige Zwischenentscheidung als Entscheidung bestimmt wird. Auf diese Weise wird von einer gemeinsame getragenen (integrativen Führungsstil) auf einen autoritären Führungsstil gewechselt und die Interaktion auf Augenhöhe beendet, um die Entscheidung nach dem erfolglosen Durchlaufen einer vordefinierten Anzahl von Zyklen zu erzwingen und eine möglicherweise unüberwindbare Uneinigkeit aufzulösen. Dies beschleunigt den Entscheidungsprozess immens.

In einer bevorzugten Ausgestaltung greift der interne Systemzyklus zum Bereitstellen der zusätzlichen Informationen auf interne Systemservices oder externe Systemservices zu. Die internen oder externen Systemservices, auch Systemdienstleistungen umfassen zumindest eines der folgenden Services: Mathematische Berechnungen, rationale Logiken, statistische Verfahren, Prognose-Verfahren, Heuristiken, Regelbasierte Systeme, Best Practices (auch bestmögliche Methode genannt), Business Intelligence (auch Systematischer Analyseprozess von Daten in elektronischer Form), Big Data (große und komplexe Datenmengen) und predicitve Analytics (vorhersagende Analyse), zwischenentscheidungsbasierte analytische Auswertungen, datenbasierte Auswertungen, Informationsservices und/oder Datenservices und vieles mehr. Diese Services werden immer dann vom Computersystem aktiviert, wenn der Grad an Übereinstimmung bei den Zwischenentscheidungen unterhalb eines vordefinierten Wertes ist. Dieser niedrige Grad an Übereinstimmung indiziert, dass weiteres Faktenwissen von internen oder externen Services benötigt wird, um eine gemeinsam getragene Entscheidung zu erzeugen. Die Fakten werden qualifiziert, um die Motive der Systemkomponenten gezielt zu verändern.

In einer vorteilhaften Ausgestaltung umfasst jedes Motivprofil zumindest ein individuelles Motiv, ein soziales Motiv und ein konditionierendes Motiv. Das individuelle Motiv ist dabei ein Sicherheitsmotiv, ein Distanzmotiv und/oder ein Einflussnahme-Motiv.

Das soziale Motiv ist beispielsweise ein Systemteilnehmerannäherungs- bzw. Ausgleichs- oder Beziehungsmotiv und/oder ein Leistungsmotiv- und/oder ein Zugehörigkeitsmotiv. Dieses Motiv priorisiert das Finden einer gemeinsam getragenen Entscheidung vor einem individuellen Erfolg der Systemkomponente.

Das konditionierende Motiv ist ein, die Informationen des Systemteilnehmers veränderndes Motiv. Dabei ist das konditionierende Motiv ein Motiv, welches Motive als auch das Faktenwissen der Systemkomponente auf Basis des Entscheidungsprozessverlaufs oder einer Entscheidungshistorie verändert. Erfolgreiche Entscheidungssituationen und Interaktionen verstärken Motivprofile und geben diese eine höhere Priorität. Misslungen Entscheidungssituationen und Interaktionen destabilisieren Motivprofile, indem sie geringeres Gewicht erhalten und im Erfahrungswissen des Entscheidungssystems gespeichert werden.

Bevorzugt wird das Motivprofil aufgrund des internen Computersystem-Zyklus adaptiert werden, sodass das Motivprofil einen veränderlichen Charakter des Systemteilnehmers definiert.

Jedes Motivprofil weist zumindest ein gewichtetes Motiv auf, wobei die Gewichtung des Motives aufgrund des internen Computersystem-Zyklus adaptiert wird. Somit wird die Zwischenentscheidung pro Zyklus verändert und eine gemeinsame getragene Entscheidung erwirkt. Bevorzugt wird ein adaptiertes Motivprofil zum Bewerten der Information und damit zum Verändern der Zwischenentscheidung des Systemteilnehmers verwendet.

In einer Ausgestaltung umfasst der interne Systemzyklus zum Bereitstellen der zusätzlichen Informationen zumindest einen internen (kognitive) Service "Motiverkennung", wobei der interne Service die Systemteilnehmer während der Zwischenentscheidungserzeugung überwacht. Dies erfolgt beispielsweise auf Basis von Augenbewegungserkennung, Pupillenveränderungserkennung, Mikromik-Erkennung, Stimmfrequenzanalyse, Atmungserkennung, Blutdruck- und Blutwerterkennung, Hautwiderstandswerterkennung und/oder Analyse der verbalen Interaktionen. Dieser kognitive Service "Motiverkennung" unterstützt den Entscheidungsprozess, um hinderliche Motive oder sich gegenseitig blockierende oder eskalierende Motive von verschiedenen Systemteilnehmern zu erkennen. Er ist auch dann hilfreich, wenn ein Systemteilnehmer ein menschliches Verhalten analysiert und den Inhalt einer Zwischenentscheidung hinterfragt, beispielsweise, um ein nicht kooperatives Verhalten zu detektieren oder eine Motivlage des Systemteilnehmers zu erkennen. Diese Informationen werden beispielsweise bei einem mit einem kognitiven Service des Computersystems aus den Interaktionen extrahiert.

Der interne Systemzyklus zum Bereitstellen der zusätzlichen Informationen umfasst bevorzugt zumindest einen internen Service, der die Systemteilnehmer bezüglich eskalierender und deeskalierender Interaktionen zwischen den Systemteilnehmern überwacht und Inkonsistenzen erkennt.

### KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Fig. 1: eine Prinzipdarstellung zum Erzeugen einer gemeinsam getragenen Entscheidung;
- Fig.2: ein Ausführungsbeispiel einer Übereinstimmungsskala;
- Fig.3: ein Ausführungsbeispiel eines Computersystems zum Erzeugen einer gemeinsam getragenen Entscheidung gemäß der Erfindung;
- Fig.4: eine Weiterbildung des in Fig.3 gezeigten Ausführungsbeispiels eines Computersystems zum Erzeugen einer gemeinsam getragenen Entscheidung gemäß der Erfindung;
- Fig.5: eine Weiterbildung des in Fig.3 oder Fig.4 gezeigten Ausführungsbeispiels eines Computersystems zum Erzeugen einer gemeinsam getragenen Entscheidung gemäß der Erfindung;
- Fig.6a: ein Ausführungsbeispiel einer Skala zur Stabilisierung eines Motives gemäß der Erfindung;
- Fig.6b: ein Ausführungsbeispiel einer Motiv-Modulation in einer Skala gemäß der Erfindung;
- Fig.7: ein Ausführungsbeispiel eines Motivprofils gemäß der Erfindung;
- Fig.8a: ein Ausführungsbeispiel einer Skala zur Stabilisierung eines Motivprofiles gemäß der Erfindung;
- Fig.8b: ein Ausführungsbeispiel einer Skala zur Destabilisierung eines Motivprofils gemäß der Erfindung;
- Fig.9: ein Ausführungsbeispiel eines um die Stabilisierungsmotive erweiterten Motivprofils gemäß der Erfindung;
- Fig. 10: ein Ausführungsbeispiel einer Skala zur Modulation (Gewichtung) eines Motivprofils gemäß der Erfindung;
- Fig. 11: ein Ausführungsbeispiel eines gewichteten Motivprofils gemäß der Erfindung;
- Fig. 12: ein Ausführungsbeispiel für den Zugriff auf Schatten-Motivprofile anderer Systemteilnehmer gemäß der Erfindung;
- Fig. 13: ein Ausführungsbeispiel zur Modulation eines gewichteten Motivprofils gemäß der Erfindung;
- Fig. 14: ein Ausführungsbeispiel einer eskalierenden Motiv-Schleife gemäß der Erfindung; und
- Fig. 15: ein Ausführungsbeispiel einer deeskalierenden Interaktion gemäß der Erfindung
- Fig. 16a: ein Ausführungsbeispiel einer eskalierten kalibrierten Motivschleife
- Fig. 16b: ein Ausführungsbeispiel einer gemäß der Erfindung deeskalierten Motivschleife.

### FIGURENBESCHREIBUNG

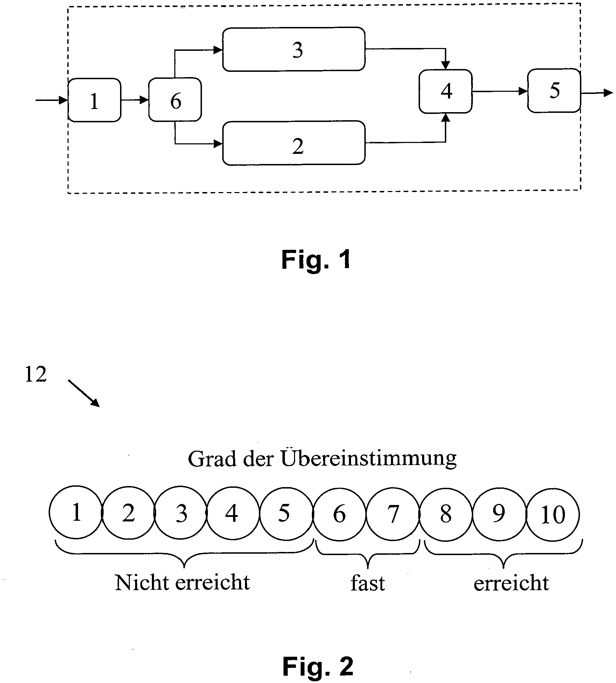

In Fig. 1 ist eine Prinzipdarstellung zum Erzeugen einer gemeinsam getragenen Entscheidung abgebildet. Dabei wird ein externer Stimulus 1, nachfolgend auch als externer Eingangsparameter 1 bezeichnet, einem Entscheidungsprozess zugeführt. Im Entscheidungsprozess sind Systemteilnehmer 2 und 3, stellvertretend für jeweils ein untergeordnetes Computersystem, sonstige intelligente Komponenten oder ein menschliches Verhalten abbildende Computerlogik angeordnet. Eine gemeinsam getragene Entscheidung 5 lässt sich dann effizient herstellen, wenn alle Systemteilnehmer 2, 3 auf übereinstimmenden Fakten (Informationen) aufsetzen und diese von den Motiven gleich oder ähnlich einschätzen. Diese Annahme trifft immer dann zu, wenn alle Systemteilnehmer 2, 3 miteinander kooperieren und mindestens eine der Systemteilnehmer 2, 3 die ausreichenden Fakten im Zugriff hat. Durch die Diversität und den Zugriff auf Fakten ist dies in hohem Maße gewährleistet.

Eine gemeinsame Entscheidung 5 ist dann erreicht, wenn die Entscheidung zu einer Übereinstimmung der Motive jeder der Systemteilnehmer 2, 3 führt. Eine Computerlogik mit einer exakten Übereinstimmung wäre dabei nicht funktional. Das in Fig. 1 gezeigte motivbasierte Entscheidungssystem sollte daher mit einer unscharfen Logik, Vergleichen und Operatoren operieren.

In der Fig.2 ist ein Ausführungsbeispiel einer Übereinstimmungsskala 12 abgebildet. Die Übereinstimmungsskala 12 weist 10 Stufen auf, die den Grad der Übereinstimmung zwischen den Systemteilnehmern 2, 3 abbilden. Der Grad, wann eine Übereinstimmung für eine gemeinsame Entscheidung erreicht ist, wird auf der Skala 12 abgebildet. Der standardmäßige Grad für eine Übereinstimmung ist bei einem Wert von (8) bis (10) erreicht. Der standardmäßige Grad für das Vorliegen keiner Übereinstimmung ist bei einem Wert von (1) bis (5) gegeben. Die Werte (6) und (7) geben eine gute Chance für die Erreichung einer Übereinstimmung an.

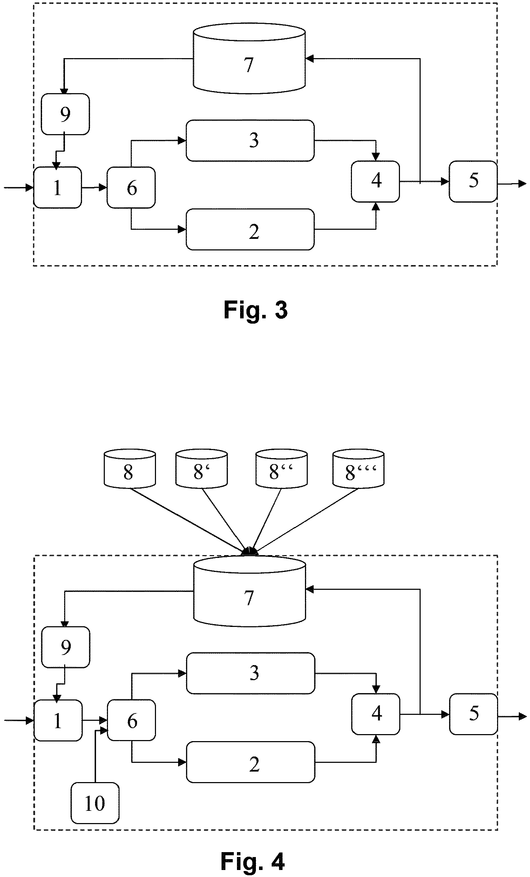

In Fig.3 ist ein Ausführungsbeispiel eines Computersystems zum Erzeugen einer gemeinsam getragenen Entscheidung 5 gemäß der Erfindung gezeigt. Erfindungsgemäß kann das Computersystem in verschiedenen Betriebsarten betrieben werden.

In einer ersten Betriebsart simuliert das Computersystem der vorliegenden Erfindung für eine Entscheidungssituation mit Menschen den Entscheidungsprozess. Dazu werden die Systemkomponenten 2, 3 virtuell abgebildet. Eine Systemkomponente 2, 3 bildet dabei einen Menschen virtuell (digital) nach und bildet diesen als Computerlogik mit den dazugehörigen Interaktionen, analog Industrie 4.0, ab. Das Computersystem simuliert jede Interaktion. Unterstützende Informationen, um den Entscheidungsprozess weiter zu gestalten, werden an den Menschen ausgegeben. Angewendet auf das Schaubild in Fig.3 wäre ein erster Systemteilnehmer 2 ein erster Mensch, dessen Verhalten und Motivlage abgebildet wird. Ein zweiter Systemteilnehmer 3 wäre entweder zweiter Mensch oder eine Maschine, in Interaktion mit dem ersten Systemteilnehmer 3, um eine gemeinsam zu tragende Entscheidung 5 herbeizuführen.

In einer zweiten Betriebsart handelt es sich in Fig.3 um ein motivbasiertes Entscheidungssystem, welches vollautomatisch ohne menschlichen Eingriff interagiert. Die Systemteilnehmer 2, 3 operieren autonom, auch wenn Stimuli 1 und Interaktionen in Form von Dokumenten, Sprache oder sonstigen Interaktion von Menschen stammen können. Diese Interaktionen werden in Form von Menschen-Maschine-Schnittstellen, beispielsweise Stimmerkennung, Worterkennung etc. in das Computersystem eingebracht.

In einer dritten Betriebsart ist eine Mischform aus der ersten Betriebsart und der zweiten Betriebsart vorgesehen. Dabei erhalten ausgewählte Menschen als erste Systemteilnehmer 2 eine computersystembasierte Unterstützung während die restlichen Systemteilnehmer 3 autonom agieren.

Gemäß Fig.3 dient ein externer Entscheidungsbedarf als externer Stimulus für das Computersystem zum Herstellen der Entscheidung 5. Der Stimulus wird als Parameter über die Schnittstelle 1 dem Computersystem zugeführt. Der externe Stimulus initiiert zunächst das Entscheidungssystem und wird in einem, zwei oder beliebig vielen Systemteilnehmern 2, 3 verarbeitet. Ein der Systemteilnehmer 2, 3 kann wiederum eine hierarchische Abbildung mit mehreren Unterkomponenten darstellen. Die hierarchische Struktur wird in einer Teilnehmerselektion 6 verwaltet. Die Teilnehmerselektion 6 stellt in einem einfachen Fall eine Dopplerfunktion bereit, mit welcher der externe Stimulus allen Systemteilnehmern 2, 3 bereitgestellt wird. Die Teilnehmerselektion 6 übernimmt zudem auch eine dynamische Steuerung der zugehörigen Systemteilnehmer 2, 3, die am Entscheidungsprozess beteiligt werden (sollen). Es können also Systemteilnehmer vor oder während der Entscheidungserzeugung deaktiviert werden, sollte das Computersystem deren Beteiligung am Entscheidungsprozess für ungerechtfertigt halten. Eine derartige Deaktivierung erfolgt insbesondere dann, wenn ein Systemteilnehmer 2, 3 sein gesamtes Faktenwissen bereits in den Entscheidungsprozess eingebracht hat und keine weitere Beeinflussung des Entscheidungsprozesses mehr vornehmen kann. Die Teilnehmerselektion 6 kann überdies auch weitere Systemteilnehmer vor oder während der Entscheidungserzeugung aktivieren, beispielsweise wenn dieser weitere Systemteilnehmer für den Entscheidungsprozess relevante Informationen oder Entscheidungskompetenz beisteuern kann.

Der externe Stimulus wird allen Systemteilnehmern 2, 3 zur Verfügung gestellt. Diese Systemteilnehmer 2, 3 entscheiden anhand ihres zugreifbaren Faktenwissens und ihrer internen Logik. Eine Bewertungsinstanz 4 legt fest, inwieweit eine Übereinstimmung erreicht ist. Die Bewertungsinstanz 4 stellt dazu den Grad der Übereinstimmung anhand der in Fig.2 dargestellten Übereinstimmungsskala 12 fest.

Reicht der Grad an Übereinstimmung aus, also ist beispielsweise ein Wert gleich oder größer 8 erkannt worden, so ist eine gemeinsam getragene Entscheidung erzeugt, die keiner weiteren Unterstützung durch das Computersystem bedarf. Somit werden keine weiteren kognitiven Services 7 des Systems benötigt, eine Entscheidung konnte effizient ohne zusätzlichen Computersystem-Zyklus erzeugt werden. Das bestehende Faktenwissen und die Logik in den Systemteilnehmern 2, 3 werden bestätigt. Die Bestätigung wird als gesammeltes Wissen den Systemteilnehmern 2, 3 und dem gesamten Entscheidungssystem zur Verfügung gestellt.

Reicht der Grad der Übereinstimmung nicht für eine gemeinsame Entscheidung aus, also ist beispielsweise ein Wert gleich 6 oder 7in der Übereinstimmungsskala ermittelt worden, wird ein Computerzyklus durchschritten und ein kognitiver Service 7 des Computersystems angefordert. Dieser kognitive Service 7, der allen Systemteilnehmern 2, 3 interne Fakten als Input zur Verfügung stellt, generiert also einen computersysteminternen Stimulus 9. Bei einem Grad der Übereinstimmung unter einem Schwellwert, beispielweise 1 bis 5, wird vor einer schwierigen Entscheidungsfindung ausgegangen und es werden die Motivprofile entsprechende angepasst. Das Entscheidungssystem lernt automatisch mit welchen Teilnehmern und welchen Stimuli die Schwellwerte gesetzt beziehungsweise angepasst werden.

Mit dem angereicherten Wissen wird nun ein einem weiteren Zyklus versucht, eine Entscheidung herzustellen. Der interne Stimulus 9 und der externe Stimulus 1 werden den Systemteilnehmern 2, 3 zugeführt. Das Computersystem kann auch selbst nach einem konfigurierbaren Zeitintervall einen internen Stimulus 9 erzeugen, der den kognitive Services 7 abruft und diese als Stimulus einspeist. Interner Stimulus 1 und/oder externer Stimulus 9 initiieren gleichermaßen das Entscheidungssystem erneut und das Computersystem wiederholt die oben angegebenen Schritte, um eine Entscheidung 5 zu erzeugen.

In Fig.4 ist eine Weiterbildung des in Fig.3 gezeigten Ausführungsbeispiels eines Computersystems zum Erzeugen einer gemeinsam getragenen Entscheidung 5 gemäß der Erfindung dargestellt. Das in Fig. 3 dargestellte Computersystem wurde in Fig.4 lediglich um weitere Komponenten erweitert, sodass die Beschreibung gemäß Fig.3 vollumfänglich auch für die Fig.4 gilt und eine entsprechende Wiederholung ausbleiben kann.

Mithilfe von Konfigurationsinformationen einer Konfigurator-Instanz 10 kann gemäß Fig.4 die Anzahl der internen Computer-Zyklen dynamisch festgelegt. In einem initialisierten System wird mit einem Startwert, beispielsweise Zyklenanzahl= drei, begonnen, der mit einem wachsenden Wissen über die bereits ausgeführten Entscheidungsprozesse dynamisch optimiert wird. Das Wissen über die Entscheidungssysteme wird von einem kognitiven Service 7 gesammelt und permanent erweitert und allen Systemteilnehmern 2, 3 zur Verfügung gestellt.

Gelingt es nach der vorgegebenen Anzahl der internen Computer-Zyklen nicht, eine gemeinsame Entscheidung 5 herzustellen, wählt die Teilnehmerselektion 6 einen Systemteilnehmer 2, 3 aus, der die Entscheidung 5 autoritär fällt. Dies ist initial in einer Konfigurationsinformation der Systemkonfigurator-Instanz 10 festgelegt oder kann wahlweise auf Basis von wachsendem Wissen nach einer Logik ausgewählt werden.

Auch die Steuerung der Aktivierung/Deaktivierung der einzelnen Systemteilnehmer 2, 3 mittels der Teilnehmerselektion 6 erfolgt über eine Konfigurationsinformation der Konfigurator-Instanz 10 und wird somit vom Computersystem selbst organisiert.

Der in Fig.3 und Fig.4 gezeigte interne kognitive Service 7 des Computersystems wird in Fig.4 um einen oder mehrere externe kognitive Systemservices 8 erweitert. Das Computersystem weist dazu eine Schnittstelle auf, um auf diese externen Services 8 zugreifen zu können.

Ein erster kognitiver Service 8 bietet dazu einfache Algorithmen, wie arithmetische Berechnungen, statistische Modelle etc. an. Diese werden vom Computersystem beauftragt, wenn der Grad an Übereinstimmung unterhalb eines vordefinierten Wertes ist und eine derartige mathematischstatistische Berechnung für die Entscheidungsfindung relevant ist.

Ein zweiter kognitiver Service 8' bietet datenbasierte analytische Auswertungen oder statistische, demographische und soziographische Daten an, die vom Computersystem abgerufen werden können, wenn der Grad an Übereinstimmung unterhalb eines vordefinierten Wertes ist und eine derartige Information für die Entscheidungsfindung relevant ist.

Ein dritter kognitiver Service 8" bietet Wetterdienst, Staumeldungen, geografische Dienste, Finanzdienste oder Nachrichtendienstdaten an, die vom Computersystem abgerufen werden können, wenn der Grad an Übereinstimmung unterhalb eines vordefinierten Wertes ist und eine derartige Daten für die Entscheidungsfindung relevant ist.

Ein vierter kognitiver Service 8'" bietet Daten, Informationen und Wissen an, die vom Computersystem abgerufen werden können, wenn der Grad an Übereinstimmung unterhalb eines vordefinierten Wertes ist und ein derartiges Wissen für die Entscheidungsfindung relevant ist.

Nachfolgend wird anhand eines sehr einfach gehaltenen Praxisbeispiels das Computersystem zum Erzeugen einer Entscheidung 5 näher erläutert.

Als Entscheidungsbedarf soll in Abhängigkeit des Wetters eine Entscheidung für eine bestimmte Geschwindigkeit hergestellt werden, um ein Ziel mit einem Fahrzeug möglichst schnell und sicher zu erreichen. Die sich widersprechenden Motive a) Sorge um die Sicherheit und b) Einflussnahme für maximale Geschwindigkeit werden in einer gemeinsam hergestellten Entscheidung 5 gefunden, damit die Umsetzung - Bewegung des Fahrzeuges mit der entschiedenen Geschwindigkeit - ausgeführt wird.

Das System erhält als Stimulus, dass die Fahrstrecke eine Landstraße mit einer Geschwindigkeitsbegrenzung von 100 Kilometer pro Stunde ist. Der Systemteilnehmer 2, beispielsweise eine Person im Fahrzeug oder eine voll-autonome Fahrzeugsteuerungslogik, geht auf Basis des systemteilnehmerinternen Faktenwissens und der systemteilnehmerinternen Logik davon aus, dass das Wetter schlecht ist. Beispielsweise gibt ein Wettersensor des Systemteilnehmers 2 die Information "Niederschlag" und ein Temperatursensor des Systemteilnehmers 2 die Information "Minusgrade" an. Die Zwischenentscheidung des Teilnehmers 2 wird daher beispielsweise lauten "Maximale Geschwindigkeit 50 km/h wegen Schlechtwetter".

Dementgegen gibt der Systemteilnehmer 3, beispielsweise ein redundantes Sensor-System im Kfz oder eine andere Person im Kfz an, dass das Wetter sehr gut ist. Beispielsweise gibt ein Lichtsensor des Systemteilnehmers 3 die Information "Sonne" und ein Reifensensor des Systemteilnehmers 3 die Information "Griffiger Straßenbelag" an. Die Zwischenentscheidung des Teilnehmers 2 wird daher lauten "Maximale Geschwindigkeit 100 km/h wegen Schönwetter".

Die Bewertungsinstanz 4 erhält die beiden Zwischenentscheidungen über die witterungsbedingte Geschwindigkeit und bewertet diese auf der Übereinstimmungsskala 12 mit kleiner 5, also als nicht stimmig. Daraufhin entscheidet die Bewertungsinstanz 4, dass ein kognitiver Service anzufordern ist. Dieser liefert die aktuelle Wetterinformationen "Eisglätte". Das ermittelte Faktenwissen über das Wetter von dem externen Service 8" wird als interner Stimulus 9 den Systemteilnehmern 2, 3 über die Teilnehmerselektion 6 zur Verfügung gestellt. Beide Systemkomponenten 2,3 bewerten den Entscheidungsbedarf nun unter Berücksichtigung des externen Stimulus "Geschwindigkeit max. 100 km/h" und dem internen Stimulus "Eisglätte" neu. Die erneute Bewertung 4 ergibt eine veränderte Zwischenentscheidung des Systemteilnehmers 3. Die Zwischenentscheidung des Teilnehmers 3 lautet "Maximale Geschwindigkeit 55 km/h wegen Schlechtwetter". Die Zwischenentscheidung des Teilnehmers 2 hat sich durch den internen Stimulus 1 nicht weiter verändert und bleibt "Maximale Geschwindigkeit 50 km/h wegen Schlechtwetter".

Nach diesem einen computerinternen Zyklus werden die beiden Zwischenentscheidungen als stimmig bewertet und damit ist die gemeinsame Entscheidung 5 hergestellt und die Bewegung des Kfz mit maximaler Geschwindigkeit 55 km/h wird angestoßen.

Die Zwischenentscheidungen in der in Fig.3 und Fig.4 werden aufgrund von Motivprofilen der Teilnehmer 2, 3 getroffen.

Einer Zwischenentscheidung pro Teilnehmer 2, 3 geht daher eine Bewertung voraus. Die Bewertung der Systemkomponenten erfolgt beispielsweise mit sieben Motiven. Diese sieben Motive teilen sich auf in fünf Bewertungsmotive und zwei konditionierende Motive.

Die fünf Bewertungsmotive unterteilen sich wiederum in drei individuelle Motive, die dem Nutzen des Systemteilnehmers 2, 3 dienen und zwei soziale Motive, die der Kooperation zwischen den Systemteilnehmern 2, 3 dienen.

Die drei individuellen Motive sind insbesondere Sorge um Sicherheit, angemessene Distanz und angemessene Einflussnahme.

Die zwei sozialen Motive sind insbesondere Ausgleich zwischen den Systemteilnehmern 2, 3 und Zugehörigkeit zu einer Leistungsklasse der Systemteilnehmer 2, 3 durch hohe Entscheidungskompetenz.

Die zwei konditionierenden Motive sind Informationen über Wissen das stabilisiert werden sollte und Wissen das destabilisiert werden sollte.

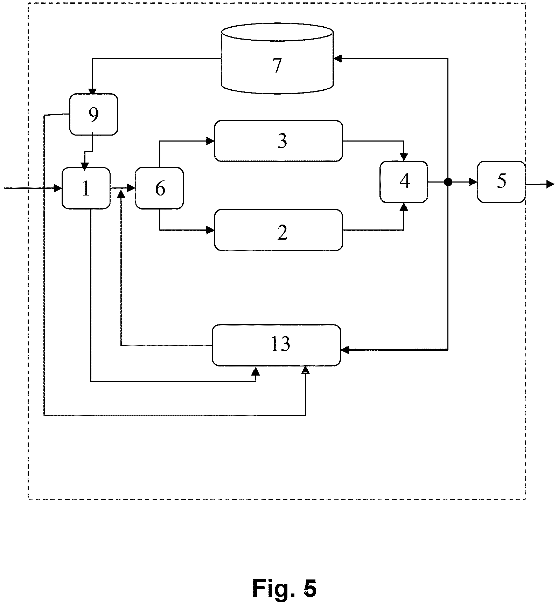

In Fig.5 ist eine Weiterbildung des in Fig.3 oder Fig.4 gezeigten Ausführungsbeispiels eines Computersystems zum Erzeugen einer gemeinsam getragenen Entscheidung 5 gemäß der Erfindung dargestellt. Das in Fig. 4 dargestellte Computersystem wurde in Fig.5 lediglich um den kognitiven Service 13 "Motiverkennung" erweitert, sodass die Beschreibung gemäß Fig.4 vollumfänglich auch für die Fig.5 gilt und eine entsprechende Wiederholung ausbleiben kann. Hierbei werden die Zwischenentscheidungen der einzelnen Systemteilnehmer 2, 3 und die Systemteilnehmer 2, 3 selbst überwacht. Dabei können beispielsweise die Augenbewegung, Pupillenveränderungen, Mikromimik, Stimmfrequenz, Verhalten, Atmung, Atemluft, Blutwerte, Blutdruck, Hautwiderstand, Herzfrequenzvariabilität und /oder Analyse der verbalen Interaktionen verwendet werden, um den Systemteilnehmer 2, 3 hinsichtlich der Motive zu klassifizieren und einen Abgleich mit der Zwischenentscheidung durchzuführen. Das Ergebnis des kognitiven Services 13 wird dann als veränderter Stimulus oder weiterer Stimulus den Teilnehmern 2, 3 zugeführt, woraufhin deren Motivprofil entsprechend die Zwischenentscheidung ändert. Alternativ wird bei Inkonsistenz oder unkooperativem Verhalten eines Teilnehmers 2, 3, die Systemkonfigurator-Instanz 10 veranlasst, den unkooperativen Teilnehmer zu deaktivieren.

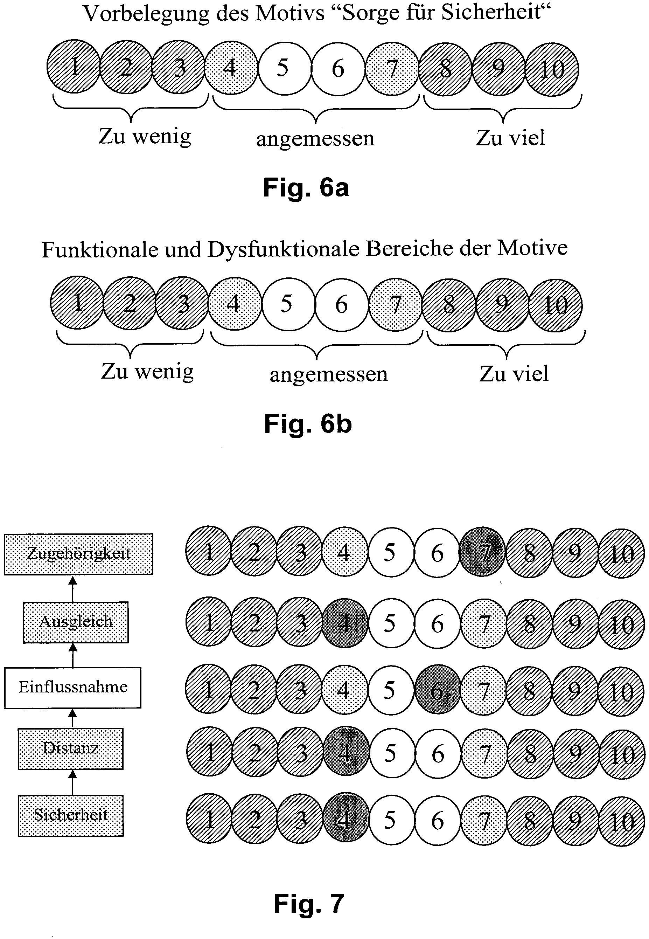

Die Stärke jedes Motives wird gemäß Fig.6a und Fig.6b in einer 10 stufigen Skala abgebildet und in jedem der Systemteilnehmer 2, 3 vorkonfiguriert. Die Motive sind in allen Systemteilnehmern 2, 3 vorhanden. Die Stärke kann sich aufgrund bestimmter interner oder externer Einflüsse verändern. Das Kriterium für eine Anpassung der Stärke ist die erfolgreiche beziehungsweise misslungene Verwendung in einem aktuellen oder vorangegangenen Entscheidungsprozess.

Ein Motiv ist daher für einen Systemteilnehmer in einer Konfigurationsinformation gemäß der Konfigurator-Instanz 10 vorbelegt. Die Bedeutung oder Stärke des Motives wird mit der 10er Skala gemäß Fig.6a und Fig.6b festgelegt, die auf der Summe aller Entscheidungen basiert. Dabei sind die Stufen 5 und 6 "angemessen"; die Stufen 4 und 7 "grenzwertig"; die Stufen 1 bis 3 "dysfunktional zu wenig" und die Stufen 8 bis 10 "dysfunktional zu viel".

Das durch die Entscheidungsprozesse entstandene und während eines Entscheidungsprozesses entstehende Wissen stabilisiert oder verändert die Vorbelegung. Gemäß Fig.5b ist die Vorbelegung des Motivs "Sorge für Sicherheit" mit Stufe 6 als angemessen hoch voreingestellt.

Diese Motive sind für jeden Systemteilnehmer individuell und für einen Entscheidungsprozess variabel. Ein Systemteilnehmer "Verschlüsselungsprozessor" hat beispielsweise die Motive "Sorge für Sicherheit" und "angemessene Distanz" mit Stufe 7 voreingestellt, während ein Systemteilnehmer "Sozialapplikation" beispielsweise die Motiv "Sorge für Sicherheit" und angemessene Distanz eher mit Stufe 4 voreingestellt hat.

Die Bewertungen für die jeweilige Zwischenentscheidung der Teilnehmer 2, 3 werden mit den fünf individuellen und sozialen Motiven zu vorkonfigurierten Motivprofilen gebildet, die als potenzielle Lösungsbausteine den Teilnehmern 2, 3 zur Verfügung sehen. Fig.7 zeigt ein Ausführungsbeispiel eines Motivprofils gemäß der Erfindung.

Jedes Motivprofil hat alle Motive in einer festen Sequenz mit einer entsprechenden Stärke vorgegeben. Es ist möglich, dass ein Systemteilnehmer 2, 3 mehrere verschiedene Motivprofile aufweist. Eine Präferenz für die Wahl eines Motivprofiles ändert sich mit der Anzahl der gelungenen und misslungenen Entscheidungen und auch mit dem externen und internen Stimulus. Es ist somit während des Entscheidungsprozesses möglich, dass ein Systemteilnehmer 2, 3 von einem ersten Motivprofil auf ein anderes zweites Motivprofil wechselt.

Alternativ oder zusätzlich verfügen die Systemteilnehmer 2, 3 über eine unterschiedliche Anzahl von Motivprofilen. Über Stabilisierungs- und Destabilisierungsvorgänge gelungener und misslungener Entscheidungen können sich Motivprofile auch verändern und in einem Entscheidungsprozess adaptiert werden. Es wird dann kein anderes Motivprofil ausgewählt, sondern ein ausgewähltes Motivprofil variiert. Bestehende Motivprofile können nicht entfernt werden, da dies gleichbedeutend mit dem Löschen erlernten Wissens wäre. Das in Fig.7 gezeigte Beispiel für ein Motivprofil stellt ein souveränes Forcieren einer Entscheidung dar. Dieses beispielhafte Motivprofil hat folgende Stärken bei den einzelnen fünf individuellen Motiven: Das Motiv "Sicherheit" ist eine funktional minimale Sicherheit an der Grenze mit einem gerade noch angemessenen Risiko. Das Motiv "Distanz" ist ebenfalls eine funktional minimale Distanz an der Grenze mit einem gerade noch angemessenen Risiko. Das Motiv "Einflussnahme" ist eine angemessene Einflussnahme ohne Druck aber mit Klarheit. Das soziale Motiv "Ausgleich" ist ein funktional minimaler Ausgleich an der Grenze, die Beziehung wird gerade aufrechterhalten. Das soziale Motiv "Zugehörigkeit" ist eine funktional maximale Zughörigkeit an der Grenze mit Risiko zu viel leisten zu wollen.

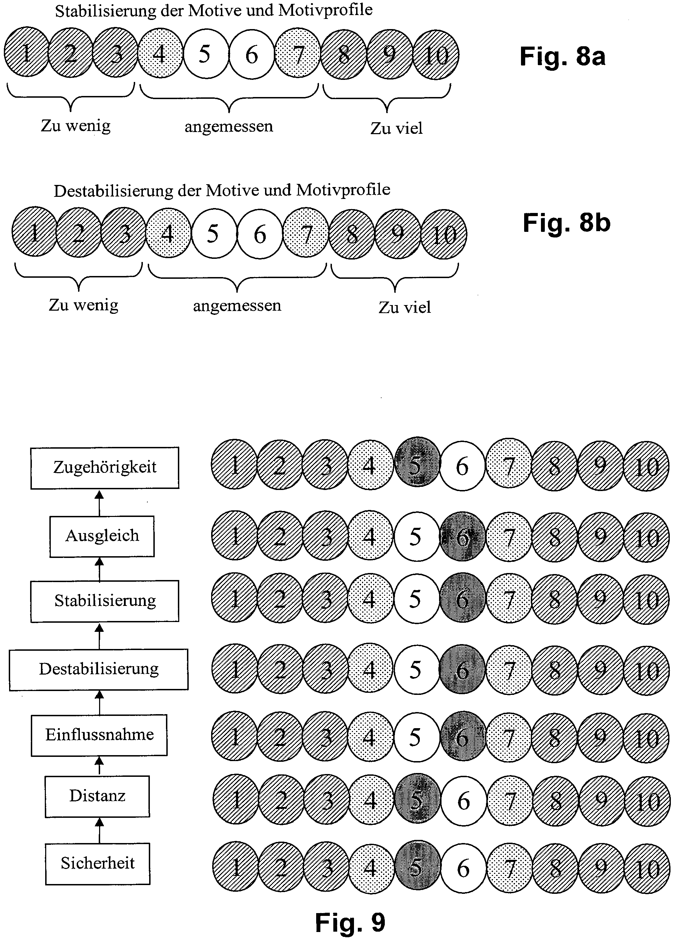

Zudem wirkt das gesammelte Wissen über eine gelungene oder nicht gelungene Entscheidung stabilisierend beziehungsweise destabilisierend auf die Motivprofile der Systemteilnehmer 2, 3. In Fig.8a ist eine entsprechende Skala zur Stabilisierung eines Motivprofils gemäß der Erfindung gezeigt. Dieser Mechanismus stellt eine selbstlernende Organisation bei den Motivprofilen her und erhöht die Intelligenz des Computersystems. Das Motiv der Stabilisierung steuert, wie veränderungsfreudig der Systemteilnehmer 3, 4 reagiert.

Die Bedeutungsbereiche der in Fig.8a gezeigten Skala bewirken für die Stufen 5 und 6 "angemessen" - eine stabilisierende Wirkung tritt ein; für die Stufen 4 und 7 - eine reduzierte stabilisierende Wirkung um Relevanz und Stereotype in Balance zu halten; für die Stufen 1 bis 3 "dysfunktional zu wenig" - Veränderungen finden nicht statt; und für die Stufen 8 bis 10 "dysfunktional zu viel" - Veränderungen finden zu häufig statt und die stabile Reaktion im gesamten System ist gefährdet.

Beispielsweise bedeuten die Stufen 1 bis 3 "dysfunktional zu wenig"', dass eine gelungene Entscheidung nicht die Bedeutung hat, dass es zu einer Stabilisierung von Motiven und Motivprofilen kommt. Es ist eher ein Schwellwert um die Relevanz zu gewährleisten. Auch wenn die Einzelentscheidung in hohem Maße gelungen ist, hat aber im Wiederholungsfall nicht die Bedeutung, dass eine weitere Stabilisierung erfolgen sollte. Diese Stufen stellen somit eher einen Schutz vor Verfestigung und stereotypischen Bewertungen dar.

Entsprechend ist in Fig.8b eine Skala zur Destabilisierung eines Motivprofils gemäß der Erfindung gezeigt. Die Destabilisierung eines Motivprofils wirkt analog zur Stabilisierung. In Fig.8b ist ein Motivprofil mit "Destabilisierung" Stufe 8 gekennzeichnet, was bedeutet, dass das Motivprofil dysfunktional ist und jedoch überbewertet ist. Dies schützt davor wiederkehrende natürliche Misserfolge zu überwerten. In Stufe 6 und 7 ist sicher erkannt, dass das Motivprofil dysfunktional ist und destabilisiert werden sollte.

In Fig.9 ist ein Ausführungsbeispiel eines um die Stabilisierungsmotive erweiterten Motivprofils gemäß der Erfindung dargestellt, wobei die fünf individuellen Motive mit den zwei Stabilisierungsmotiven "Stabilisierung" und "Destabilisierung" erweitert wurden. Dabei wurde einem Systemteilnehmer 2, 3 ein Standard-Motivprofil zugeordnet, das aus der Konfigurationsinformation der Konfigurator-Instanz 10 stammt und sich mit dem Prozesswissen anpasst.

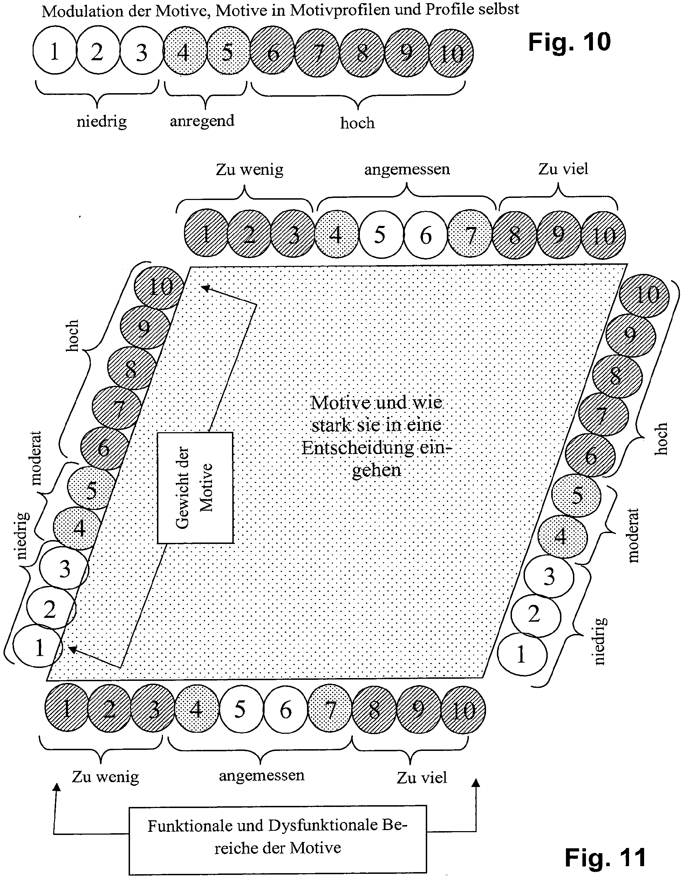

Die Stärke der Motive in den Motivprofile der Systemteilnehmer 2, 3 gibt vor, mit welchem Gewicht sie in eine Entscheidung einfließen. Daraus ergibt sich erfindungsgemäß eine relative Gewichtung der Motivprofile, die anhand Fig. 10 ebenfalls auf einer 10er Skala abgebildet ist. Im Computersystem ist dabei ein kognitiver Service 7 vorgesehen, der die Standardeinstellung eines Motivprofils gemäß Konfigurator-Instanz 10 während des Entscheidungsprozesses modulieren, das heißt erhöhen beziehungsweise erniedrigen kann. Das Gewicht variiert für eine Entscheidungsfindung mit Stufe 1 bis 3, derart, dass die Motive weitgehend gleichgewichtet bleiben; mit Stufe 4 und 5, dass die Motivstärke leicht angehoben wird, wodurch sie im Computersysteminternen Zyklus empfindlicher werden und die Zwischenentscheidung etwas mehr beeinflussen; mit Stufe 6 bis 10, dass die Motivstäre deutlich angehoben und so deutlicher reagiert wird.

Eine Reduzierung der Motivstärke kann mit Fakten, Interaktion und Stimuli erreicht werden. Wird Sicherheit gewährleistet durch Faktenwissen, wie beispielsweise eine günstige Prognose, das Vorhandensein von notwendigen Ressourcen, etc., so reduziert sich die Motivstärke entsprechend. Das Gewicht der Motive ergibt eine 2-dimensionale Abbildung, wie die Motive in einem Motivprofil wirken. Ein Ausführungsbeispiel für eine 2-dimensionale Abbildung der erfindungsgemäßen Gewichtung der Motive in einem Motivprofil ist in Fig. 11 dargestellt.

Erfindungsgemäß erfolgt die Zuordnung der Motivprofile zu den Systemteilnehmern 2, 3 folgendermaßen. Jedem Systemteilnehmer 2, 3 wird ein Standard-Motivprofil zugeordnet. Zudem erhält jeder Systemteilnehmer 2, 3 beliebig viele Motive-Profile für spezielle Entscheidungssituation.

Das Standard-Motivprofil eines Systemteilnehmers 2, spiegelt das Motivprofil des Systemteilnehmers 2, 3 wieder, wie er sich über die Zeit in den jeweiligen Entscheidungssituationen herauskristallisiert. Das Standard-Motivprofil wird permanent aus dem Wissen der Entscheidungssituation nachjustiert. Die Entwicklung eines Systemteilnehmers 2, 3 wird damit fortgeschrieben und abgebildet.

Das aktive Motivprofil eines Systemteilnehmers 2, 3 ist das aktuelle Entscheidungsprofil, das vom Computersystem für den aktuellen Entscheidungsprozess, ggf. dem aktuellen Entscheidungsprozesszyklus geführt wird und den gerade aktuelle Zustand enthält. Beispielsweise kann das Motiv "Sorge um Sicherheit" für diesen Entscheidungsprozess erhöht sein, wenn kritische Fakten zur Verfügung gestellt werden. Erkennt ein Systemteilnehmer 2, 3, dass das eigene Motiv "Sorge um Sicherheit" berechtigterweise hoch ist, wird dieser Teilnehmer 2, 3 eher Interventionen planen, die eine Einflussnahme von anderen Systemteilnehmern 2, 3 verhindert, zumindest solange bis die entsprechende Sicherheit hergestellt ist. Danach wird das Motiv "Sorge um Sicherheit" reduziert und die Einflussnahme durch andere unterstützt.

Das Experten-Motivprofil ist ein bewährtes Motivprofile in speziellen Entscheidungssituationen. In einem aufwendigen, kritischen Entscheidungsprozess ist somit das Motiv "Einflussnahme" reduziert, sodass nicht zu früh eine Entscheidung forciert wird, die den Entscheidungsprozess blockieren würde.

Das Schatten-Motivprofil ist das aktive Motivprofile des Systemteilnehmers 2, 3, welches anderen Systemteilnehmern 2, 3 zur Verfügung gestellt wird. Mit dem Schatten-Motivprofil kann ein Systemteilnehmer 2, 3 gezielt agieren und Intervention planen. Erkennt ein Systemteilnehmer in einem Schatten-Motivprofil, dass das Motiv "Sorge um Sicherheit" ansteigt, kann quasiautomatisch das eigene Motiv "Einflussnahme" reduziert werden, um die Entscheidungserzeugung zu beschleunigen.

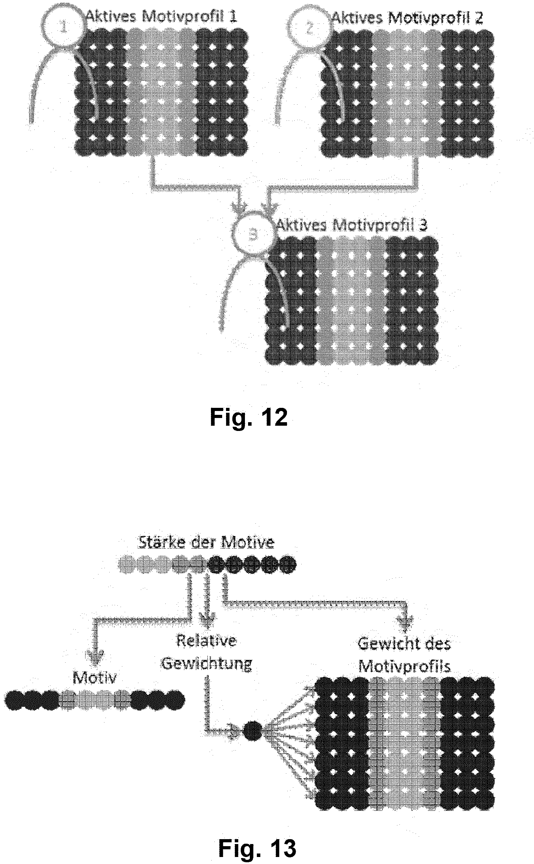

In Fig. 12 ist ein Ausführungsbeispiel für den Zugriff auf Schatten-Motivprofile anderer Systemteilnehmer gemäß der Erfindung. Hierbei erhält ein weiterer Systemteilnehmer Zugriff auf die Schatten-Motivprofile der Systemteilnehmer 2 und 3.

Die Schatten-Motivprofile der anderen Systemteilnehmer 2, 3 kann das Computersystem auch aus den Stimuli 1, 9 der Interaktionen erstellen. Sie sind die neben dem eigenen aktiven Motivprofil die zentrale Basis für eine Interventionsplanung, um eine gemeinsam getragene Entscheidung 5 zu erzeugen.

Das Computersystem verwaltet die Motivprofile 11 aller Systemteilnehmer 2, 3. Für einen kooperativen Entscheidungsprozess werden allen Systemteilnehmer 2, 3 alle aktiven Motivprofile 11 zur Verfügung gestellt. Das Computersystem lässt sich derart konfigurieren, dass nur bestimmte Motivprofile 11 für bestimmte Systemteilnehmer 2, 3 zur Verfügung gestellt werden.

In Fig. 13 ist ein Ausführungsbeispiel zur Modulation eines gewichteten Motivprofils gemäß der Erfindung dargestellt. Wie gezeigt, kann während eines Entscheidungsprozesses erfindungsgemäß sowohl eine Verschiebung in den Bewertungsbereichen der einzelnen Motive eines Motivprofils als auch in der Gewichtung des gesamten Motivprofiles erfolgen.

Jedes Motivprofil 11 selbst hat nochmals eine analoge Gewichtung wie die Motive selbst, die zur Auswahl beim Systemteilnehmer 2, 3 dient.

Im Computersystem kann zudem ein kognitiver Service 13 "Motiverkennung" integriert sein, so wie es in Fig.5 dargestellt ist. Dieser interne Systemservice 13 überwacht die Motive und das Motivprofil jedes Systemteilnehmers 2, 3 während des Entscheidungsprozesses, insbesondere während der Bereitstellung der Zwischenentscheidung und gibt entsprechende Steuerinformationen an die Teilnehmerselektion 6 weiter. Dabei kann der Entscheidungsprozess entscheidend beeinflusst werden. Die Motive werden in folgenden Objekten im Entscheidungsprozess erkannt: Im internen Stimulus 9 und im externen Stimulus 1. In der Bewertungsinstanz 4, speziell beim Bestimmen des Grads an Übereinstimmung und bei den verwendeten Motivprofilen der Systemteilnehmer 2, 3.

Bei der Erkennung der Motive und ihrer Stärke für die externen und internen Stimuli 1, 9 können bestehende kognitive Services verwendet werden, um Entscheidungsbedürfnisse und Interaktionen wie Worterkennung, Absichtserkennung und andere zu detektieren.

Sind Menschen im Kontakt mit dem Entscheidungssystem, beispielsweise über Schnittstellen mit dem jeweiligen Systemteilnehmer 2, 3, so werden bestehende interne Services 7 des Computers wie Augenbewegung, Pupillenveränderungen, Mikromimik, Stimmfrequenz, Verhalten, Atmung, Atemluft, Blutwerte, Blutdruck, Hautwiderstand, Herzfrequenzvariabilität und /oder Analyse der verbalen Interaktionen verwendet, um den Systemteilnehmer 2, 3 hinsichtlich ihrer Motive zu klassifizieren. Das Computersystem und/oder einen anderen Systemteilnehmer 2, 3 vergleicht dann die Zwischenentscheidung des Systemteilnehmers mit den Ergebnissen der kognitiven Services 7, insbesondere dem Service 13 "Motiverkennung", ab und führt anhand eines Plausibilitätstests eine Einschätzung durch, inwieweit der Systemteilnehmer kooperativ ist oder nicht und inwieweit Interventionen zu befürchten sind, um ggf. das eigene aktuelle Motivprofil anzupassen, um eine gute Entscheidung 5 zu erzeugen.

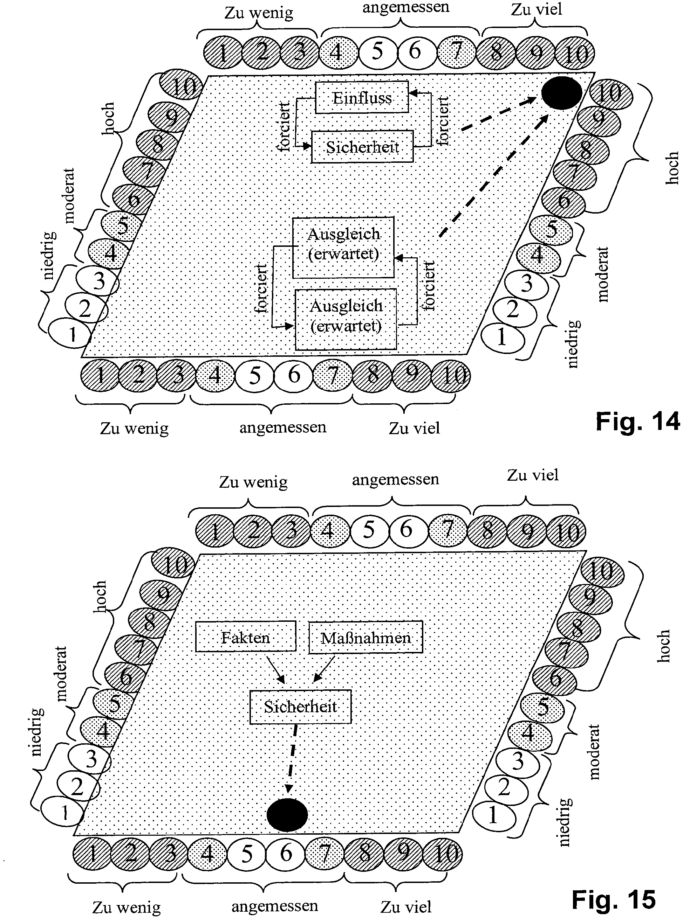

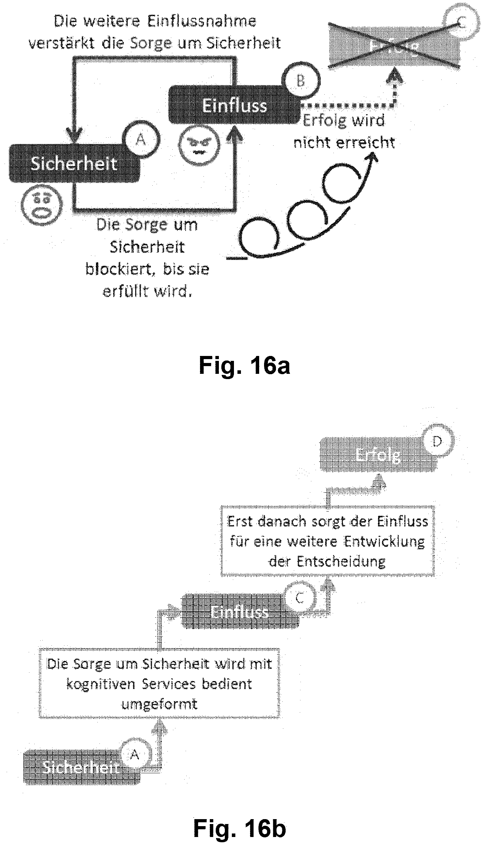

Erfindungsgemäß zielt eine Interaktion darauf aus, ein Motiv im Motivprofil eines Systemteilnehmers 2, 3 zu verändern. Es gibt Interaktionen, wie dysfunktionale Schleifen, die sowohl Stärke als auch das Motiv in den dysfunktionalen Bereich verschieben. In Fig. 14 ist ein Ausführungsbeispiel einer eskalierenden Motiv-Schleife gemäß der Erfindung dargestellt. Weitere Erläuterungen zu einer eskalierenden Motiv-Schleife sind in Fig. 16a und Fig. 16b gezeigt.

Eine Motivschleife ist dabei beispielsweise eine Sicherheit-Einfluss-Schleife. Ein stärkeres Motiv "Sicherheit" forciert das Motiv "Einflussnahme". Ein stärkeres Motiv "Einflussnahme" forciert wiederum das Motiv "Sicherheit". Diese Motivschleife wird eskalieren, dieser Systemteilnehmer 2, 3 wird nicht mehr konstruktiv am Entscheidungsprozess mitwirken. Zur Lösung dieses Dilemmas kann einerseits die Systemkomponente deaktiviert werden, sodass keine Zwischenentscheidung dieses Systemteilnehmers berücksichtigt wird.

Alternativ, so wie in Fig. 15 gezeigt, kann mit einer deeskalierenden Interaktion gemäß der Erfindung entgegengewirkt werden. Dabei wird im Computersystem bewusst die Stärke eines Motives reduziert und das Motiv damit wieder in den funktionalen Bereich gebracht. Wird das Motiv "Sicherheit" mit Faktenwissen relativiert und damit eine Maßnahme abgesichert, so reduziert sich die Stärke weiter und das Motiv kommt in den funktionalen Bereich. Für diese Interaktionen kann ebenfalls ein kognitiver Service 7 im Computersystem bereitgestellt sein. Dieser kognitive Service 7 überwacht deeskalierende und eskalierende Interaktionen und liefert dem Systemteilnehmer 2, 3 Stimuli 9 die dem entgegenwirken.

In Fig.16a ist eine unerwünschte Motivschleife dargestellt. Derartige Motivschleifen werden immer wieder ausgelöst werden, wenn sich konkurrierende Motivprofile einzelner Systemteilnehmer 2, 3 ungeregelt beeinflussen können, beispielsweise ein bedenkentragender erster Systemteilnehmer 2 und ein erfolgserzwingender zweiter Systemteilnehmer 3. Die dabei entstehenden Motive "Sorge um Sicherheit" des ersten Systemteilnehmers 2 und "Einflussnahme" des zweiten Systemteilnehmers 3 variieren in Abhängigkeit einer emotionalen Erregung von "unangenehm" bis "unerträglich". Früher oder später werden die Eskalationen und die damit einhergehenden Friktionen direkt mit dem Stimuli 1, 9 verbunden. Der zweite Systemteilnehmer 3 löst durch sein Motiv "Einflussnahme" (Punkt B Fig. 16a) beim ersten Systemteilnehmer 2 das Motiv "Sorge um Sicherheit" (Punkt A in Fig. 16a) im dysfunktionalen Bereich aus, die das blockierende Verhalten verstärkt. Die Blockade führt erneut zur höheren "Einflussnahme", die wiederum verstärkend auf den ersten Systemteilnehmer 2 wirkt, der mit seiner Blockade die Schleife anheizt. Nach der gegenseitigen Aktivierung der Programme im dysfunktionalen Bereich der jeweiligen Motive wirken die Emotionen mit allen Begleiterscheinungen noch länger nach. In dieser Zeit wirkt die Stimmung ohne Stimulus 1, 9, und es werden Bewertungen entsprechend stark verzerrt, ein "Commitment" herzustellen erscheint unmöglich.

Als Konsequenz wenden sich übrige Systemteilnehmer vom Entscheidungsprozess ab, der Erfolg ist gefährdet oder bleibt aus (Punkt C in Fig. 16a). Eine derartige Teilnehmerdynamik verselbstständigt sich. Die bisher nicht zu erklärende und vor allem nur begrenzt lösbare Dynamik führte in der Vergangenheit dazu, dass Führungskräfte diesen Konflikten ausweichen und auf die Gruppenkompetenz oft ganz verzichteten und im autoritären Führungsstil entscheiden, was nicht zwingend eine gute gemeinsam getroffene Entscheidung erzeugt.

Eine Form der De-Eskalation, die bereits für die Gestaltung der Interaktion und Einbindung von kognitiven Services genutzt werden kann, ist die Bedienung der Motivprofile in der vorgegebenen Motivsequenz. Damit kann das Auftreten einer eskalierenden Motivschleife aus Fig.16a, beispielsweise der Sicherheit-Einfluss-Schleife, erfindungsgemäß maßgeblich verhindert werden, wie in Fig.16b gezeigt ist. Bevor die Einflussnahme erfolgt (Punkt C in Fig.16b), werden kognitive Services (Punkt B in Fig. 16b) zur Verfügung gestellt, die das Motivprofil oder zumindest ein Motiv darin derart verändern, dass der Systemteilnehmer 2, 3 aus der drohenden eskalierenden Motivschleife ausbricht und ein geordneter Entscheidungsprozess vollziehbar ist, beispielsweise, indem beim Systemteilnehmer für Sicherheit gesorgt wird (Punkt A in Fig. 16b) und somit deeskaliert wird. Dies kann beispielsweise eine verschlüsselte Datenübertragung betreffen oder die Anweisung, alle analytischen Verfahren redundant rechnen zu lassen, um Ergebnisfehler auszuschließen. So kann der Erfolg (Punkt D in Fig.16b) mit viel größerer Wahrscheinlichkeit erreicht werden.

Das erfindungsgemäße Computersystem kann zudem auch Inkohärenzen automatisch identifizieren. Wenn Interventionen, denen ebenfalls Motive zugeordnet werden können, sich in Widerspruch zum aktiven Motivprofil der jeweiligen Systemteilnehmer 2, 3 befinden, wird dies als eine Inkonsistenz durch den kognitiven Service 13 "Motiverkennung" entdeckt. Zudem können das Faktenwissen des Computersystems und die Entscheidungshistorie im Computersystem diese Inkonsistenzen aufdecken. Dabei können die Inkonsistenzen aus mehreren Ebenen heraus betrachtet werden, einmal aus Sicht des Systemteilnehmers 2, 3 selbst, dann aus Sicht extremer Motivprofile und dann auf Basis der Anzahl von Interventionen.

Im gesamten Computersystem wird eine Kooperation der Systemteilnehmer 2, 3 vorausgesetzt. Eine fehlende Kooperation deckt das Entscheidungssystem selbst auf. Klarer Indikatoren für eine fehlende Kooperation sind inkonsistente Faktenlagen und eine drastische Überbewertung durch Motivprofile.

Trotz der fehlenden Kooperation einzelner Systemteilnehmer 2, 3 kann eine gute Entscheidung erzeugt werden, wenn die fehlende Kooperation entdeckt und die Systemkomponente deaktiviert wird.

Im Rahmen der Erfindung können alle beschriebenen und/oder gezeichneten und/oder beanspruchten Elemente beliebig miteinander kombiniert werden.

### BEZUGSZEICHENLISTE

- 1: Schnittstelle für externen Stimulus
- 2: Erste Systemkomponente
- 3: Zweite Systemkomponente
- 4: Bewertungsinstanz
- 5: Entscheidungsergebnis
- 6: Teilnehmerselektion
- 7: Systeminterne Services
- 8: Systemexterne Services
- 9: Interner Stimulus
- 10: Systemkonfigurator-Instanz
- 11: Gewichtetes Motivprofil
- 12: Übereinstimmungsskala
- 13: Ko gnitiver Service "Motiverkennung"

## Patentansprüche

1. Computersystem zur effizienten Erzeugung einer gemeinsam getragenen Entscheidung mittels Motiven mit:
einer Schnittstelle (1) zum Empfangen externer Eingangsparameter, die für die zu erzeugende Entscheidung relevant sind, wobei diese externen Eingangsparameter jedem Systemteilnehmer (2, 3) bereitgestellt werden;
einem ersten Systemteilnehmer (2) aufweisend zumindest ein erstes Motivprofil (11) zum Bereitstellen einer ersten teilnehmerabhängigen Zwischenentscheidung unter motivprofilabhängiger Bewertung der Eingangsparameter;
zumindest einem zweiten Systemteilnehmer (3) aufweisend zumindest ein zweites Motivprofil (11) zum Bereitstellen einer zweiten teilnehmerabhängigen Zwischenentscheidung unter motivprofilabhängiger Bewertung der Eingangsparameter;
einer Bewertungslogik (4) zum Erkennen eines Grads an Übereinstimmung der ersten teilnehmerabhängigen Zwischenentscheidung und der zweiten teilnehmerabhängigen Zwischenentscheidung anhand einer Übereinstimmungsskala (12),
wobei beim Erkennen eines Übereinstimmungsgrads oberhalb eines definierten Wertes eine von dem ersten Systemteilnehmer (2) und dem zumindest zweiten Systemteilnehmer (3) gemeinsam getragene Entscheidung (5) als erzeugt gilt und eine der teilnehmerabhängigen Zwischenentscheidungen als gemeinsam getragene Entscheidung (5) ausgegeben wird;
wobei beim Erkennen eines Übereinstimmungsgrads unterhalb eines definierten Wertes ein interner Systemzyklus zum Bereitstellen zusätzlicher Informationen aktiviert wird, welche allen Systemteilnehmern (2, 3) bereitgestellt werden, um die teilnehmerabhängigen Zwischenentscheidungen jedes Systemteilnehmers (2, 3) zu verändern.

2. Computersystem nach Anspruch 1, wobei jeder Systemteilnehmer (2, 3) über zwei unterschiedliche Entscheidungssysteme die teilnehmerabhängige Zwischenentscheidung bereitstellt.

3. Computersystem nach Anspruch 1 oder 2, wobei jeder Systemteilnehmer (2, 3) über zumindest ein weiteres Motivprofil (11) verfügt und ein im Systemteilnehmer (2, 3) abgelegtes Motivprofil (11) anhand der externen Eingangsparameter und/oder einer abgespeicherten Entscheidungshistorie von jedem Systemteilnehmer (2, 3) selbst ausgewählt wird.

4. Computersystem nach einem der vorhergehenden Ansprüche, wobei jedes Motivprofil (11) vorkonfiguriert ist und aus zumindest einem ersten Motiv und einem zweiten Motiv besteht, wobei jedes im Motivprofil (11) enthaltene Motiv mit einem Initialwert parametrisiert ist.

5. Computersystem nach einem der vorhergehenden Ansprüche, wobei das Computersystem eine Systemkonfigurator-Instanz (10) aufweist, wobei diese Systemkonfigurator-Instanz (10) einzelne Systemteilnehmer (2, 3) deaktiviert und/oder zusätzliche Systemteilnehmer (2, 3) aktiviert.

6. Computersystem nach einem der vorhergehenden Ansprüche, wobei jeder Systemteilnehmer (2, 3) einen eigenen Speicherbereich mit darin abgelegten Informationen und einer Entscheidungshistorie aufweist, auf deren Basis das Bereitstellen der teilnehmerabhängigen Zwischenentscheidung unter motivprofilabhängiger Bewertung der Eingangsparameter erfolgt.

7. Computersystem nach einem der vorhergehenden Ansprüche, wobei die Übereinstimmungsskala (12) zehnstufig ist und bei einem vordefinierten Wert kleiner gleich 5 keine Übereinstimmung festgestellt wird und bei einem vordefinierten Wert größer gleich 8 eine gemeinsam getragene Entscheidung als erzeugt gilt, und bevorzugt bei einem Wert zwischen 5 und 8 das Computersystem den Entscheidungsprozess mit Faktenwissen und Interaktionen die Motivprofile der einzelnen Systemteilnehmer (2, 3) gezielt beeinflussen.

8. Computersystem nach einem der vorhergehenden Ansprüche, wobei bei Erreichen einer konfigurierten Anzahl von internen Systemzyklen einer der Systemteilnehmer (2, 3) von der Bewertungsinstanz (4) ausgewählt wird, dessen geänderte teilnehmerabhängige Zwischenentscheidung als Entscheidung bestimmt wird.

9. Computersystem nach einem der vorhergehenden Ansprüche, wobei der interne Systemzyklus zum Bereitstellen der zusätzlichen Informationen auf interne Systemservices (7) oder externe Systemservices (8) zugreift, wobei die internen oder externen Systemservices (7, 8) zumindest eines der folgenden Services umfasst:
- Mathematische Berechnungen,
- zwischenentscheidungsbasierte analytische Auswertungen,
- datenbasierte Auswertungen,
- rationale Logiken,
- statistische Verfahren,
- Prognose-Verfahren,
- Heuristiken,
- Regelbasierte Systeme,
- Best Practices,
- Business Intelligence,
- Big Data
- predicitve Analytics,
- Informationsservices, und/oder
- Datenservices.

10. Computersystem nach einem der vorhergehenden Ansprüche, wobei jedes Motivprofil (11) zumindest ein individuelles Motiv, ein soziales Motiv und ein konditionierendes Motiv umfasst,
wobei das individuelle Motiv ein Sicherheitsmotiv, ein Distanzmotiv und/oder ein Einflussnahmemotiv ist,
wobei das soziale Motiv ein Systemteilnehmerannäherungsmotiv und/oder ein Leistungsklassenmotiv ist; und/oder
wobei das konditionierende Motiv ein die Informationen des Systemteilnehmers bewertendes Motiv ist.

11. Computersystem nach einem der vorhergehenden Ansprüche, wobei das Motivprofil (11) aufgrund des internen Computersystem-Zyklus adaptiert wird.

12. Computersystem nach einem der vorhergehenden Ansprüche, jedes Motivprofil (11) zumindest ein gewichtetes Motiv aufweist, wobei die Gewichtung eines Motives im Motivprofil aufgrund des internen Computersystem-Zyklus adaptiert wird.

13. Computersystem nach einem der Ansprüche 10 oder 11, wobei ein adaptiertes Motivprofil zum Bewerten der Information und damit zum Verändern der Zwischenentscheidung des Systemteilnehmers (2, 3) verwendet wird.

14. Computersystem nach einem der vorhergehenden Ansprüche, wobei der interne Systemzyklus zum Bereitstellen der zusätzlichen Informationen zumindest einen internen Systemservice (7) umfasst, wobei der interne Service die Systemteilnehmer (2, 3) während der Zwischenentscheidungserzeugung überwacht, beispielsweise auf Basis einer der folgenden Services:
- Augenbewegungserkennung,
- Pupillenveränderungserkennung,
- Mikromik-Erkennung,
- Stimmfrequenzanalyse,
- Atmungserkennung,
- Blutdruck- und Blutwerterkennung,
- Hautwiderstandswerterkennung und /oder
- Analyse der verbalen Interaktionen.

15. Computersystem nach einem der vorhergehenden Ansprüche, wobei der interne Systemzyklus zum Bereitstellen der zusätzlichen Informationen zumindest einen internen Systemservice (7) umfasst, der die Systemteilnehmer (7, 8) bezüglich eskalierender und deeskalierender Interaktionen zwischen den Systemteilnehmern (7, 8) überwacht und Inkonsistenzen erkennt.

16. Computersystem nach einem der vorhergehenden Ansprüche, wobei der interne Systemzyklus zum Bereitstellen der zusätzlichen Informationen zumindest einen internen Systemservice (7) umfasst, der die Systemteilnehmer (2, 3) bezüglich einer eskalierender und/oder deeskalierenden Motive-Sequenz zwischen den Systemteilnehmern (2, 3) überwacht, Inkonsistenzen in den Motivprofilen erkennt und deeskalierende und/oder eskalierende kognitive Services aktiviert.

17. Computersystem nach einem der vorhergehenden Ansprüche, wobei das Computersystem einen integrativen Führungsstil bereitstellt, indem eine gemeinsam getragene Entscheidung hergestellt wird.
